(19) Europäisches Patentamt
European Patent Office
Office européen des brevets

(11) **EP 2 428 797 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
***G01N 27/62*** *(2006.01)*

(21) Anmeldenummer: **10176538.6**

(22) Anmeldetag: **14.09.2010**

(54) **VORRICHTUNG ZUR DETEKTION UND IDENTIFIZIERUNG VON GASEN MITTELS IONENMOBILITÄTSSPEKTROMETRIE**

DEVICE FOR IDENTIFYING AND DETECTING GASES BY MEANS OF ION MOBILITY SPECTROMETRY

DISPOSITIF DE DETECTION ET D'IDENTIFICATION DE GAZ PAR SPECTROMETRIE DE MOBILITE IONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.03.2012 Patentblatt 2012/11**

(73) Patentinhaber: **Airsense Analytics GmbH**
**19061 Schwerin (DE)**

(72) Erfinder:
• **Walte, Andreas, Dr.**
  **19059 Schwerin (DE)**
• **Münchmeyer, Wolf**
  **38468 Ehra-Lessien (DE)**
• **Ungethüm, Bert**
  **19059 Schwerin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
WO-A1-2005/001464    GB-A- 2 228 139
US-A- 4 445 038    US-A1- 2007 228 269
US-B1- 6 459 079

**Beschreibung**

Die Erfindung bezieht sich auf eine Vorrichtung zur Identifizierung von Gasen.

Derartige Vorrichtungen zur Detektion und Identifizierung von Gasen werden zur Erkennung und zum Nachweis von chemischen Stoffen oder Verbindungen, insbesondere von explosiven und/oder gesundheitsschädigenden, in sehr geringen Konzentrationen nachzuweisenden Stoffen oder Stoffverbindungen eingesetzt.

Der Nachweis explosiver und/oder toxischer chemischer Verbindungen erfordert Messverfahren mit Nachweisgrenzen im ppt-ppb-Bereich. Zur Erkennung und zum Nachweis dieser chemischen Verbindungen werden deshalb häufig Spektrometer eingesetzt. Dabei ist die Verwendung von Ionenmobilitätsspektrometern (IMS), die auch als Plasma-Chromatographen bezeichnet werden, zu bevorzugen, weil sie im Gegensatz zu anderen Spektrometern, wie z. B. einem Massenspektrometer, keine Vakuumpumpe zur Erzeugung eines Vakuums für die Detektion der chemischen Stoffe oder Verbindungen benötigen. Deshalb sind IMS gegenüber anderen Spektrometern in ihrer Bauausführung klein und kostengünstig.

Der Anwendungsbereich der IMS ist sehr groß. Er reicht vom medizinischen Bereich, z. B. bei der Untersuchung der Ausatemluft von Patienten, über den Einsatz zur Produktionsüberwachung, z. B. bei der Qualitätskontrolle bei Lebensmitteln bis zum militärischen Bereich, z. B. beim Nachweis von Kampfstoffen. Eine allgemeine Übersicht über IMS und deren Anwendungen findet sich beispielsweise in: G.A. Eiceman und Z. Karpas "Ion Mobility Spectrometry" (2nd. Edition, CRC, Boca Raton, 2005).

Der Aufbau und die Funktionsweise des IMS sind in einer Vielzahl von Veröffentlichungen beschrieben.

So wird beispielsweise in der US 3,621,240 ein klassisches Flugzeit-IMS vorgestellt, bei dem die unterschiedliche Beweglichkeit von Ionen bei Atmosphärendruck ausgenutzt wird. Dazu werden kontinuierlich in einer Ionenquelle entweder mittels radioaktiver Strahlung, Photoionisierung oder Koronaentladungen die Zielverbindungen ionisiert. Sehr häufig werden radioaktive Quellen verwendet, die direkt Luftmoleküle ionisieren.

Diese ionisierten Luftmoleküle reagieren weiter und bilden zusammen mit Wassermolekülen so genannte Reaktant-Ionen. Diese Reaktant-Ionen reagieren mittels Protonentransfer-, Elektronentransfer- oder Protonenabstraktions-Reaktionen mit den interessierenden Verbindungen und bilden die so genannten Produkt-Ionen. Diese Produkt-Ionen werden in einer sehr kurzen Zeitspanne von ca. 200 Mikrosekunden mit Hilfe eines elektrischen Gitters in eine Driftröhre eingelassen, welche ein elektrisches Feld aufweist und die Ionen in einem Driftgas, üblicherweise gefilterte Luft bei Umgebungsdruck, beschleunigt. Durch die Änderung der Polarität des elektrischen Feldes der Driftstrecke können in einem positiven Betriebsmodus positive Ionen und in einem negativen Betriebsmodus negative Ionen nachgewiesen werden. Durch das elektrische Feld werden die eingelassenen Produkt-Ionen ständig beschleunigt und durch Stöße mit den neutralen Molekülen im Driftgas ständig abgebremst. Durch das elektrische Feld wirkt auf alle Ionen mit gleicher Ladung die gleiche Zugkraft. Da aber die Produkt-Ionen verschiedene Durchmesser und Formen aufweisen, weisen die Produkt-Ionen unterschiedliche Driftgeschwindigkeiten auf. Am Ende der Driftröhre treffen die Produkt-Ionen mit diesen unterschiedlichen Driftgeschwindigkeiten auf einen Detektor auf. Aus den unterschiedlichen Flugzeiten der Produkt-Ionen durch die Driftröhre, die typischerweise im Bereich von 5 bis 30 Millisekunden liegen, lassen sich Rückschlüsse auf die untersuchten chemischen Verbindungen ziehen.

Als Startpuls für die Messung der Driftgeschwindigkeit im klassischen Flugzeit-IMS dient der Schaltprozess des elektrischen Gitters, welcher nur einen Teil der Ionen in den Driftraum lässt. Durch die Stöße mit den Molekülen der Umgebungsluft kommt es zu einer diffusiven Verbreitung der eingelassenen Ionen. Das am Detektor gemessene Signal ist dementsprechend in Form einer gaußförmigen Glockenkurve. Aus der gemessenen Flugzeit oder Driftzeit im Maximum der Glockenkurve und der bekannten Länge der Driftstrecke kann die Driftgeschwindigkeit bestimmt werden, wobei ein resultierendes Spektrum zur Identifizierung der chemischen Stoffe oder Verbindungen genutzt werden kann.

Die Flugzeit der Produkt-Ionen durch die Driftröhre ist umgekehrt proportional der Driftgeschwindigkeit, mit der die Produkt-Ionen auf den Detektor treffen. Die Driftgeschwindigkeit, als Ergebnis der Beschleunigung im elektrischen Feld und der Abbremsung durch Stöße der Ionen mit den neutralen Molekülen im Driftgas, ist wiederum abhängig von der Ionenmasse beziehungsweise Ionengröße und der Ionenform.

Die Driftgeschwindigkeit der Produkt-Ionen $v_d$ ist bei geringer Feldstärke E, z. B. E = 200 V/cm, linear abhängig von der Feldstärke. Bei diesen geringen Feldstärken ist dann die Beweglichkeit oder Mobilität K der Produkt-Ionen unabhängig von der Feldstärke und lässt sich wie folgt ausdrücken:

$$K = v_d / E \ .$$

Da die Driftgeschwindigkeit der Ionen auch von der Temperatur und dem Druck in der Driftröhre abhängig ist, werden zur Erkennung und zum Nachweis der chemischen Verbindungen die Beweglichkeiten oder Mobilitäten der Produkt-Ionen immer auf Normalbedingungen, also auf eine Normaltemperatur $T_0 = 273°K$, und einen Normaldruck $p_0$

= 1013hPa bezogen. Die reduzierte oder normalisierte Beweglichkeiten oder Mobilitäten der Produkt-Ionen lässt sich dann wie folgt darstellen:

$$K_0 = K \cdot (T_0 / T) \cdot (p / p_0) = K \cdot (273°K/T) \cdot (p / 1013hPa)$$

Von Nachteil bei der Verwendung des klassischen Flugzeit-IMS ist aber, dass nur ein geringer Teil, üblicherweise 1 %, der Produkt-Ionen für die Detektion und damit zur Auswertung der untersuchten chemischen Verbindungen genutzt wird. Da der Startpuls des elektrischen Gitters verglichen mit der Driftzeit der Ionen sehr kurz ist, gelangt nur ein geringer Teil, üblicherweise 1 %, der Produkt-Ionen durch das Gitter in die Driftröhre. Der größere Teil der Produkt-Ionen trifft auf das Gitter, wenn es geschlossen ist und wird am Gitter neutralisiert.

Deshalb sind durch Erhöhung des Ionendurchlasses in Kombination mit einer Modulation des Ionenstrahls mit Sperrgittern eine Optimierung der Ausbeute der in die Driftröhre gelangenden Produkt-Ionen und somit auch die Erhöhung der Nachweisgrenze der untersuchten chemischen Stoffe oder Verbindungen möglich. So wird beispielsweise in der DE 195 15 270 C2 eine derartige Modulation des Ionenstromes vorgeschlagen, so dass mit Hilfe einer mathematischen Entfaltung, z. B. über Hadamard- oder Fourier-Transformationen, das Laufzeitspektrum des IMS berechnet werden kann.

Von Nachteil der bisher vorgestellten IMS ist aber, dass entweder nur positive oder negative Produkt-Ionen gemessen werden können und deshalb die Polarität der Trennröhre gewechselt werden muss, was die Messdauer erhöht.

Deswegen ist es anstrebenswert, zwei Driftröhren parallel zu betreiben, um sowohl positive als auch negative Produkt-Ionen von ein und derselben Probe messen zu können. So wird beispielsweise in US 4,445,038 ein Ionenbeweglichkeitsdetektor vorgeschlagen, welcher zwei Driftröhren, jeweils für positive und negative Produkt-Ionen, mit jeweils einem elektrischen Gitter enthält. Von Nachteil ist hier die gegenüberliegende Anordnung der beiden Driftröhren. Nach Rokushika, Hatano, Baim und Hill [Rokushika S., Hatano H., Baim M.A., Hill H.H., Resolution Measurement for Ion Mobility Spectrometry, Anal. Chem. 1985, 57, 1902] ist die Auflösung eines IMS proportional zur Analysenzeit. Um eine möglichst gute Auflösung zu erhalten, ist es also anstrebenswert, die Driftröhren möglichst lang zu gestalten. Durch die in US 4,445,038 vorgeschlagene Anordnung werden insbesondere mobile Geräte groß und unhandlich.

Aus US 6,459,079 B1 ist eine Vorrichtung zur Identifizierung von Gasen bekannt, bei der zwei Driftröhren parallel zueinander angeordnet sind. Diese besitzen ein gemeinsames Eindriftsystem, wobei eine Driftröhre für positive und die andere Driftröhre für negative Produkt-Ionen ausgelegt ist.

WO 2005/001464 A1 offenbart eine Vorrichtung mit zwei parallel angeordneten Ionenmobilitätsspektrometern. Diese besitzen jedoch keinen gemeinsamen Reaktionsraum zur vorherigen Trennen der Produkt-Ionen in negative und positive Produkt-Ionen.

US 2007/0228269 A1 und GB 2 228 139 A zeigen Ionenmobilitätsdetektoren.

US 2007/0228269 A1 zeigt eine Vorrichtung zur Identifizierung von Gasen, bei der gleichzeitig positive und negative Produkt-Ionen detektiert werden können.

GB 2 228 139 A offenbart eine Vorrichtung zur Identifizierung von Gasen mit zwei Driftröhren, die gegenüber liegend zueinander angeordnet sind und ein gemeinsames Einlasssystem aufweisen.

Der Erfindung liegt daher die Aufgabe zugrunde, eine Vorrichtung zur Identifizierung von Gasen zu entwickeln, die einen einfachen kompakten Aufbau besitzt sowie eine sofortige und zeitgleiche Detektion der zu untersuchenden chemischen Verbindungen zulässt und gleichzeitig eine effizientere Ausnutzung der zur Detektion zur Verfügung stehenden Produkt-Ionen erlaubt.

Diese Aufgabe wird erfindungsgemäß durch eine Vorrichtung mit den in Anspruch 1 sowie durch eine Vorrichtung mit den in Anspruch 2 genannten Merkmalen gelöst. Bevorzugte Ausgestaltungen ergeben sich aus den Unteransprüchen 3 bis 6.

Die erfindungsgemäßen Vorrichtungen zur Identifizierung von Gasen beseitigen die genannten Nachteile des Standes der Technik.

Vorteilhaft bei der Anwendung der neuen Vorrichtungen zur Identifizierung von Gasen ist es, dass sowohl positive als auch negative Produkt-Ionen parallel und gleichzeitig detektiert werden können und das auf kleinstem Raum. Hierzu ist es von Vorteil, wenn die zu vermessende Probe mit Hilfe eines Trägergasstromes in die Ionisierungsregion geleitet wird, wo durch direkte Ionisierung oder Ladungstransferreaktionen entsprechend positive und negative Produkt-Ionen gebildet werden. Von besonderem Vorteil ist es, wenn die Produkt-Ionen durch elektrische Felder nach ihrer Polarität getrennt und vor den Einlassbereich der jeweils korrespondierenden Drifträume transportiert werden, ohne in sie Einlass zu finden. Von weiterem besonderen Vorteil ist ein pulsartiges Abschalten der elektrischen Felder und ein pulsartiges Zuschalten weiterer elektrischer Felder, wodurch die Produkt-Ionen zum Startzeitpunkt der Laufzeitmessung zu 100 % in den jeweiligen Driftraum injiziert werden. Im Driftraum befindlich werden die Produkt-Ionen, vorteilhafter Weise durch ein weiteres konstantes elektrisches Feld, zum Detektor beschleunigt. Durch die ständigen Stöße mit den Molekülen des Driftgases stellt sich eine konstante Driftgeschwindigkeit ein. Nach Passieren der Abschirmgitter in unmittelbarer Nähe der Detektoren werden die Produkt-Ionen am jeweiligen Detektor aufgefangen, als Strom in den Transimpedanzverstärker geleitet und in messbare Spannungen konvertiert. Je nach Zeitpunkt des Auftreffens auf dem Detektor lässt sich jeder Probe eine charakteristische Driftzeit zuordnen. Von Vorteil ist es, wenn zur Auswertung der gemessenen Driftzeiten und zur Identifizierung der chemischen Verbindungen diese gemessenen Driftzeiten mit vorher ermittelten Driftzeiten bekannter chemischer Verbindungen verglichen werden und/oder dieser Vergleich zwischen gemessenen Driftzeiten und den bekannter Driftzeiten von chemischer Stoffe und Verbindungen mittels mathematischer beziehungsweise statistischer Methoden, zum Beispiel mittels regelbasierender Algorithmen oder auch Künstlich-neuronalen Netzen erfolgt.

Vorteilhaft bei der Anwendung der neuen Vorrichtung zur Identifizierung von Gasen ist es, dass beide Driftröhren einerseits durch ein gemeinsames Einlasssystem und andererseits durch jeweils einen Detektor begrenzt sind. In jeder Driftröhre befindet sich eine die Driftröhren in einen korrespondierenden Reaktionsraum und zwei Drifträume unterteilende Elektrodenanordnung, wobei im gemeinsamen Reaktionsraum eine Ionenquelle und in den Drifträumen jeweils ein Abschirmgitter angeordnet sind. Vorteilhaft ist es auch, wenn die Drifträume aus abwechselnd angeordneten Metallringen und Isolatorringen bestehen, wobei jeder Metallring um den Driftraum jeweils eine Gleichspannungselektrode ausbildet, oder die Drifträume aus jeweils einem oder mehreren Rohren mit geringer elektrischer Leitfähigkeit besteht. Von besonderem Vorteil ist es, wenn beide Drifträume parallel nebeneinander angeordnet sind und mit entgegengesetzten, das elektrische Feld einprägenden, im Bereich des Detektors angelegten Spannungen betrieben werden.

Die Aufgabe wird ferner durch eine Vorrichtung zur Identifizierung von Gasen gelöst, wobei die Driftröhren einen gemeinsamen Reaktionsraum umfassen, sich im gemeinsamen Reaktionsraum mindestens zwei Ionenführungselektrodenanordnung befinden und sich im gemeinsamen Reaktionsraum eine Ionenquelle und in den Drifträumen der Driftröhren jeweils ein Abschirmgitter befinden, wobei die erste Elektrodenanordnung, bestehend aus Elektroden, zur Trennung von positiven oder negativen Produkt-Ionen aus einer Produkt-Ionenansammlung innerhalb des Reaktionsraumes und die zweite Elektrodenanordnung, bestehend aus Elektroden, zum Beschleunigen der positiven oder negativen Produkt-Ionen in die Drifträume dient. Hierdurch wird vorteilhaft möglich, auf die Anordnung eines elektrischen Gitters zum Einlassen von Produkt-Ionen in den Driftraum zu verzichten. Sowohl das Separieren der positiven oder negativen Produkt-Ionen als auch das anschließende Beschleunigen der separierten positiven oder negativen Produkt-Ionen in den Driftraum erfolgt durch ansteuerbare Elektrodenanordnungen. Durch entsprechende Ansteuerung kann auch gleichzeitig der Startpuls für die Messung der Driftgeschwindigkeit innerhalb des Driftraumes generiert werden. Der Aufbau des Ionenmobilitätsspektrometers wird hierdurch deutlich vereinfacht und eine effektivere Betriebsweise ist möglich. Die Vorrichtung lässt sich sowohl bei Einröhrenionenmobilitätsspektrometern als auch bei Ionenmobilitätsspektrometern mit zwei oder mehr Driftröhren einsetzen.

Die Erfindung wird nachfolgend an einem Ausführungsbeispiel näher erläutert werden.

Dazu zeigt:

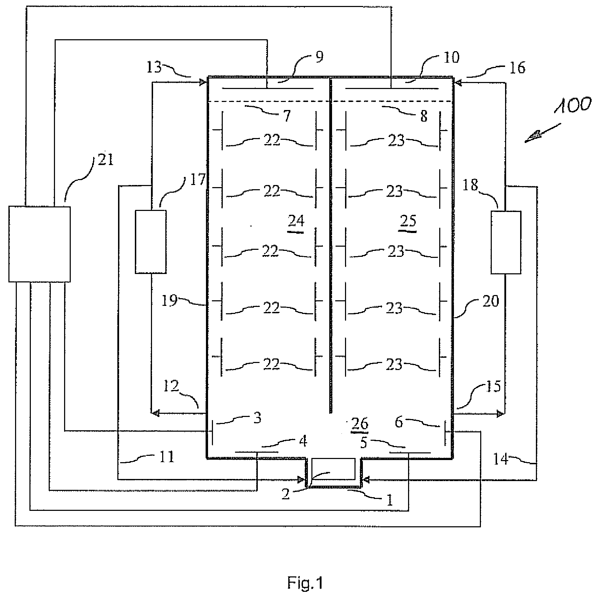

Figur 1: eine schematische Darstellung eines Ionenmobilitätsspektrometers.

Die insgesamt mit 100 bezeichnete Vorrichtung zur Identifizierung von Gasen besteht gemäß dem Ausführungsbeispiel aus zwei Driftröhren 19 und 20, die einerseits durch ein Einlasssystem 1 und andererseits durch zwei aus jeweils einer flachen leitfähigen Scheibe bestehenden Detektoren 9 und 10 begrenzt sind.

In der Driftröhre 19 und 20 befinden sich Ionenführungselektroden 3, 4, 5 und 6, wodurch der Innenraum der Driftröhren 19 und 20 in einen gemeinsamen Reaktionsraum 26 und zwei Drifträume 24 und 25 unterteilt ist. Dabei wird der Reaktionsraum 26 durch das Einlasssystem 1 und die Drifträume 24 und 25 durch die Detektoren 9 und 10 begrenzt. Außerdem sind im Reaktionsraum 26 nahe dem Einlasssystem 1 eine Ionenquelle 2 und in den Drifträumen 24 und 25 vor den Detektoren 9 und 10 jeweils ein Abschirmgitter 7 und 8 angeordnet, wobei die Ionenquelle 2 eine radioaktive Ni63-Folie aufweist und die Abschirmgitter 7 und 8 einer kapazitiven Entkopplung dienen.

Die im Reaktionsraum vorhandenen Ionenführungselektroden 3, 4, 5 und 6 sind ebene Elektroden an den Reaktionsraum 26 begrenzenden Seiten.

In den Drifträumen 24 und 25 sind Driftelektroden 22 und 23 angeordnet, die jeweils elektrisch über Widerstände verbunden sind und somit als Gleichspannungselektroden ausgebildet sind. Die an den Driftelektroden 22 und 23 anliegenden Spannungen sind so ausgewählt, dass konstante Feldstärken sich in den Drifträumen 24 und 25 ausbilden können.

Die Vorrichtung 100 zur Identifizierung von Gasen zeigt folgende Funktion: Die zu untersuchende chemische Verbindung einschließlich der Umgebungsluft wird über das Einlasssystem 1 mittels eines Trägergasstromes in die Ionenquelle 2 geführt. Das Einlasssystem 1 kann aus einer kleinen Öffnung oder für mobile Systeme aus einer Silikonmembran bestehen.

In der Ionenquelle 2 werden durch die radioaktive Strahlung der Ni63-Folie hauptsächlich aus der Umgebungsluft stammende Luftmoleküle ionisiert. Über weiterführende Reaktionen und Anlagerungen mit Wassermolekülen werden so genannte ReaktantIonen gebildet. Diese Reaktant-Ionen reagieren anschließend, über Protonentransfer-, Elektrodentransfer- oder Protonenabstraktions-Reaktionen, mit Molekülen der zu untersuchten chemischen Verbindungen und bilden Produkt-Ionen aus. Die hierdurch entstandenen positiven und negativen Produkt-Ionen gelangen in ein elektrisches Feld, welches durch die Ionenführungselektroden 3 und 6 aufgebaut wird, durch gegensätzliche Spannungen an den Ionenführungselektroden 3 und 6 werden die Produkt-Ionen nach ihrer Polarität getrennt, vor den jeweils korrespondierenden Driftraum 24 beziehungsweise 25, ohne jedoch in ihn Einlass zu finden. In den beiden Drifträumen 24 und 25 befinden sich in diesem Zustand keine Produkt-Ionen.

Durch Abschalten der Spannungen an den Ionenführungselektroden 3 und 6 und des dadurch bedingten elektrischen Feldes und gleichzeitigem Anschalten von Spannungen an den Ionenführungselektroden 4 und 5, welche derart polarisiert sind, dass die vor den Ionenführungselektroden 4 und 5 befindlichen Produkt-Ionen abgestoßen werden, erfolgt die Produkt-Ionen-Injektion in den Driftraum 24 beziehungsweise 25 und damit der Start der Laufzeitmessung. Hierbei werden alle zu diesem Zeitpunkt vor dem jeweiligen Driftraum 24 und 25 befindlichen Produkt-Ionen in den selbigen injiziert. Durch Umkehrung des Vorganges, das heißt Abschalten der Spannungen an Ionenführungselektroden 4 und 5 und Anschalten der Spannungen an den Ionenführungselektroden 3 und 6, wird der Produkt-Ionen-Injektionsvorgang abgeschlossen und weitere Produkt-Ionen bewegen sich wieder vor den jeweils korrespondierenden Driftraum, ohne in ihn Einlass zu finden. Dieser Vorgang wiederholt sich periodisch, so dass kontinuierlich Probengase vermessen werden können und zwar positive und negative Produkt-Ionen gleichzeitig unter erhöhter Effizienz der Einbringung von Produkt-Ionen in die Drifträume 24 und 25.

Die Spannungen an den Driftelektroden 22 und 23 erzeugen jeweils ein elektrisches Feld, welches positive respektive negative Ladungsträger in Richtung Detektor beschleunigt. Die nun in den Drifträumen 24 und 25 befindlichen Produkt-Ionen werden von diesem elektrischen Feld erfasst und in Richtung Detektor 9 und 10 gezogen. Auf dem Weg zu den Detektoren 9 und 10 müssen die Ionen die elektrischen Felder, bedingt durch die Driftelektroden 22 und 23, durchdringen, wobei durch diese elektrischen Felder auf allen Ionen gleicher Ladung eine gleiche Zugkraft wirkt. Da aber die Ionen ständig mit den neutralen Luftmolekülen zusammenstoßen, ist die Geschwindigkeit der Ionen in den elektrischen Feldern von der Ionenmasse beziehungsweise Ionengröße und der Ionenform abhängig. Die durch die Driftelektroden 22 und 23 erzeugten elektrischen Felder geringer Feldstärke bewirken, dass Ionen mit gleichen Durchmessern und Formen auf gleiche Driftgeschwindigkeiten und Ionen mit verschiedenen Durchmessern und Formen auf unterschiedliche Driftgeschwindigkeiten beschleunigt werden.

Am Ende der Drifträume 24 und 25 treffen die Ionen auf die Detektoren 9 und 10 auf. Die Detektoren 9 und 10 sind Faraday-Auffänger, wobei die vor den Detektor 9 und 10 angeordneten Abschirmgitter 7 und 8 einer kapazitiven Entkopplung zwischen den sich kurz vor den Detektor 9 und 10 befindenden Produkt-Ionen und den Detektor 9 und 10 dienen.

Die Messsignale der Detektoren 9 und 10 werden in einer Steuereinheit 21 ausgewertet, wobei aus Injektionsvorgang und dem Auftreffen der Ionen auf den Detektoren 9 und 10 die Driftzeiten der Produkt-Ionen durch die Drifträume 24 und 25 ermittelt werden. Diese Ermittlung kann erfolgen, da das Steuergerät auch die Ionenführungselektroden 3, 4, 5 und 6 ansteuert. Zur Auswertung dieser gemessenen Driftzeiten werden diese gemessenen Driftzeiten mit vorher ermittelten Driftzeiten bekannter chemischer Verbindungen verglichen, wobei bei gleichen Driftzeiten auch gleiche Produkt-Ionen und damit auch gleiche chemische Verbindungen vorliegen.

Es ist auch denkbar, die in der Ionenquelle 2 stattfindenden Umwandlungsprozesse durch andere geeignete Prozesse zu ersetzen. So könnten die Ionen statt mittels radioaktiver Strahlung auch beispielsweise durch eine Photoionisierung oder eine Koronaentladungen erzeugt werden.

Auch ist es denkbar, die Selektivität der Driftröhren 19 und 20 durch die Verwendung eines zusätzliches Reaktionsgases, beziehungsweise Dopandgas, zu optimieren. Mit diesem Reaktionsgas werden chemische Reaktionen, welche z. B. durch Protonenaffinitäten bei positiven Ionen oder Elektronegativitäten bei negativen Ionen gesteuert werden, beeinflusst, so dass die Selektivität des Verfahrens beeinflusst wird. Zusätzlich kann die Selektivität der Driftröhre 19 und 20 auch durch Anlagerungs- und Ablagerungsprozesse der Reaktionsgase beziehungsweise anderer elektrisch neutraler Gase an den Ionen bei hohen Feldstärken beeinflusst werden.

Des Weiteren sind auch Kombinationen des Ionenmobilitätsspektrometers mit anderen Sensoren beziehungsweise Detektoren und/oder mit weiteren Verfahren zur Steigerung der Selektivität insbesondere z. B. durch einen davor angeordneten Gaschromatographen denkbar.

Liste der Bezugszeichen

| 1 | Einlasssystem |
| 2 | Ionenquelle |
| 3 | Ionenführungselektrode |
| 4 | Ionenführungselektrode |

| 5 | Ionenführungselektrode |
|---|---|
| 6 | Ionenführungselektrode |
| 7 | Abschirmgitter |
| 8 | Abschirmgitter |
| 9 | Detektor |
| 10 | Detektor |
| 11 | Driftgaseinlass |
| 12 | Driftgasauslass |
| 13 | Driftgaseinlass |
| 14 | Driftgaseinlass |
| 15 | Driftgasauslass |
| 16 | Driftgaseinlass |
| 17 | Pumpe |
| 18 | Pumpe |
| 19 | Driftröhre |
| 20 | Driftröhre |
| 21 | Steuereinheit |
| 22 | Driftelektrode |
| 23 | Driftelektrode |
| 24 | Driftraum |
| 25 | Driftraum |
| 26 | Reaktionsraum |
| 100 | Vorrichtung |

**Patentansprüche**

1. Vorrichtung (100) zur Identifizierung von Gasen, die mindestens zwei Driftröhren (19, 20) umfasst, wobei jede der Driftröhren (19, 20) jeweils mindestens einen Detektor (9, 10) zur Detektion von Produkt-Ionen aufweist, wobei mindestens zwei Driftröhren (19, 20) parallel nebeneinander liegen und einerseits durch ein gemeinsames Einlasssystem (1) und andererseits durch jeweils mindestens einen Detektor (9, 10) begrenzt sind, **dadurch gekennzeichnet, dass** die Driftröhren (19, 20) einen gemeinsamen Reaktionsraum (26) umfassen, sich im gemeinsamen Reaktionsraum (26) Ionenführungs-elektrodenanordnungen (3, 4, 5, 6) befinden und sich im gemeinsamen Reaktionsraum (26) eine Ionenquelle (2) und in den Drifträumen (24, 25) der Driftröhren jeweils ein Abschirmgitter (7, 8) befinden, wobei die Vorrichtung eine Steuereinheit (21) aufweist, die so gestaltet ist, dass die Ionenführungselektrodenanordnungen (3, 4, 5, 6) in zwei Schaltzustände schaltbar sind:

   - in einen ersten Schaltzustand, in dem durch ein von den Ionenführungselektroden (3, 6) erzeugtes elektrisches Feld die Produkt-Ionen vor die jeweils korrespondierenden Drifträume (24, 25) bewegt werden, ohne in die Drifträume (24, 25) Einlass zu finden und
   - in einen zweiten Schaltzustand durch Abschalten der Spannungen an den Ionenführungselektroden (3, 6) und gleichzeitiges Zuschalten der Spannungen an den Ionenführungselektroden (4, 5), die derart polarisiert sind, dass die vor den Ionenführungselektroden (4) und (5) befindlichen Produkt-Ionen abgestossen werden und die Produkt-Ionen in die korrespondierenden Drifträumen (24, 25) injiziert werden.

2. Vorrichtung (100) zur Identifizierung von Gasen, die mindestens zwei Driftröhren (19, 20) umfasst, wobei jede der Driftröhren jeweils mindestens einen Detektor (9, 10) zur Detektion von Produkt-Ionen aufweist, wobei mindestens zwei Driftröhren parallel nebeneinander liegen und einerseits durch ein gemeinsames Einlasssystem (1) und andererseits durch jeweils mindestens einen Detektor (9, 10) begrenzt sind und die Vorrichtung eine Steuereinheit (21) umfasst, **dadurch gekennzeichnet, dass** die Driftröhren (19, 20) einen gemeinsamen Reaktionsraum (26) umfassen, sich im gemeinsamen Reaktionsraum (26) mindestens zwei Ionenführungselektrodenanordnungen (3, 6) und (4, 5) befinden und sich im gemeinsamen Reaktionsraum (26) eine Ionenquelle (2) und in den Drifträumen (24, 25) der Driftröhren jeweils ein Abschirmgitter (7, 8) befinden, wobei die erste Elektrodenanordnung, bestehend aus Elektroden (3) und (6), mit der Steuereinheit ansteuerbar ist, sodass sie zur Trennung von positiven oder negativen Produkt-Ionen aus einer Produkt-Ionenansammlung innerhalb des Reaktionsraumes (26) dient, und die zweite Elektrodenanordnung, bestehend aus Elektroden (4) und (5), durch die Steuereinheit (21) ansteuerbar ist, so dass sie zum Beschleunigen der positiven oder negativen Produkt-Ionen in die korrespondierenden Drifträume (24, 25) dient.

3. Vorrichtung nach einem der vorhergehenden Ansprüche, **dadurch gekennzeichnet, dass** die Drifträume (24, 25) abwechselnd angeordnete Driftelektroden (22, 23) umfassen, wobei jede Driftelektrode (22, 23) um die Drifträume (24, 25) elektrisch verbunden ist und jeweils eine Gleichspannungselektrode ausbildet.

4. Vorrichtung nach einem der vorhergehenden Ansprüche, **dadurch gekennzeichnet, dass** die Drifträume (24, 25) aus einem oder mehreren Rohren mit geringer elektrischer Leitfähigkeit bestehen.

5. Vorrichtung nach einem der vorhergehenden Ansprüche, **dadurch gekennzeichnet, dass** die Ionenführungselektroden (3, 4, 5, 6) eben sind und die Begrenzung des Reaktionsraumes (26) bilden.

6. Vorrichtung nach einem der Ansprüche 4 und 5, **dadurch gekennzeichnet, dass** die Abschirmgitter (7, 8) vor den Detektoren (9, 10) angeordnet sind, wobei die Abschirmgitter (7, 8) einer kapazitiven Entkopplung dienen.

**Claims**

1. An apparatus (100) for identifying gases, comprising at least two drift tubes (19, 20), wherein each of the drift tubes (19, 20) has at least one detector (9, 10) for detecting product ions, wherein at least two drift tubes (19, 20) are beside one another in a parallel manner and are bounded by a common inlet system (1), on the one hand, and by at least one detector (9, 10) in each case, on the other hand, **characterized in that** the drift tubes (19, 20) comprise a common reaction space (26), ion guide electrode arrangements (3, 4, 5, 6) are located in the common reaction space (26), and an ion source (2) is located in the common reaction space (26), and a screening grid (7, 8) is located in each of the drift spaces (24, 25) of the drift tubes, wherein the apparatus has a control unit (21) which is designed such that the ion guide electrode arrangements (3, 4, 5, 6) are switchable to two switching states:

   - to a first switching state, in which an electric field generated by the ion guide electrodes (3, 6) moves the product ions to the front of their corresponding drift spaces (24, 25), without said product ions being allowed to enter the drift spaces (24, 25), and
   - to a second switching state by switching off the voltages to the ion guide electrodes (3, 6) and simultaneously switching on the voltages to the ion guide electrodes (4, 5), which are polarized such that the product ions located in front of the ion guide electrodes (4) and (5) are repelled and the product ions are injected into the corresponding drift spaces (24, 25).

2. An apparatus (100) for identifying gases, comprising at least two drift tubes (19, 20), wherein each of the drift tubes (19, 20) has at least one detector (9, 10) for detecting product ions, wherein at least two drift tubes are beside one another in a parallel manner and are bounded by a common inlet system (1), on the one hand, and by at least one detector (9,10) in each case, on the other hand, and the apparatus comprises a control unit (21), **characterized in that** the drift tubes (19, 20) comprise a common reaction space (26), at least two ion guide electrode arrangements (3, 6) and (4, 5) are located in the common reaction space (26), and an ion source (2) is located in the common reaction space (26), and a screening grid (7, 8) is located in each of the drift spaces (24, 25) of the drift tubes, wherein the first electrode arrangement, consisting of electrodes (3) and (6), can be controlled by the control unit, such that it serves to separate positive or negative product ions from a product ion cluster within the reaction space (26), and the second electrode arrangement, consisting of electrodes (4) and (5), can be controlled by the control unit (21), such that it serves to accelerate the positive or negative product ions into the corresponding drift spaces (24, 25).

3. The apparatus according to any one of the preceding claims, **characterized in that** the drift spaces (24, 25) comprise drift electrodes (22, 23) which are arranged alternately, wherein each drift electrode (22, 23) is electrically connected around the drift spaces (24, 25) and forms a DC voltage electrode in each case.

4. The apparatus according to any one of the preceding claims, **characterized in that** the drift spaces (24, 25) consist of one or several tubes with low electric conductivity.

5. The apparatus according to any one of the preceding claims, **characterized in that** the ion guide electrodes (3, 4, 5, 6) are plane and form the boundary of the reaction space (26).

6. The apparatus according to either of claims 4 and 5, **characterized in that** the screening grids (7, 8) are arranged in front of the detectors (9,10), wherein the screening grids (7, 8) serve for capacitive decoupling.

**Revendications**

1. Dispositif (100) pour l'identification de gaz, comprenant au moins deux tubes de dérive (19, 20), où chacun des tubes de dérive (19, 20) comporte au moins un détecteur (9, 10) pour la détection d'ions de produit, où au moins deux tubes de dérive (19, 20) sont disposés parallèlement l'un à l'autre et sont délimités d'un côté par un système d'admission (1) commun et de l'autre côté par au moins un détecteur (9, 10) chacun, **caractérisé en ce que** les tubes de dérive (19, 20) comprennent une chambre de réaction (26) commune, **en ce que** des agencements d'électrodes de guidage d'ions (3, 4, 5, 6) se trouvent dans la chambre de réaction (26) commune et **en ce qu'**une source d'ions (2) se trouve dans la chambre de réaction (26) commune et une grille écran (7, 8) dans chacune des chambres de dérive (24, 25) des tubes de dérive, le dispositif comportant une unité de commande (21) réalisée de manière à permettre la commutation des agencements d'électrodes de guidage d'ions (3, 4, 5, 6) vers deux étant de commutation :

   - vers un premier état de commutation, où les ions de produit sont déplacés par un champ électrique généré par les électrodes de guidage d'ions (3, 6) devant les chambres de dérive (24, 25) correspondantes sans être admis dans les chambres de dérive (24, 25), et
   - vers un deuxième état de commutation par coupure des tensions sur les électrodes de guidage d'ions (3, 6) et application simultanée des tensions sur les électrodes de guidage d'ions (4, 5), lesquelles sont polarisées de manière à repousser les ions de produit se trouvant devant les électrodes de guidage d'ions (4) et (5) et à injecter les ions de produit dans les chambres de dérive (24, 25) correspondantes.

2. Dispositif (100) pour l'identification de gaz, comprenant au moins deux tubes de dérive (19, 20), où chacun des tubes de dérive (19, 20) comporte au moins un détecteur (9, 10) pour la détection d'ions de produit, où au moins deux tubes de dérive (19, 20) sont disposés parallèlement l'un à l'autre et sont délimités d'un côté par un système d'admission (1) commun et de l'autre côté par au moins un détecteur (9, 10) chacun, et ledit dispositif comprenant une unité de commande (21), **caractérisé en ce que** les tubes de dérive (19, 20) comprennent une chambre de réaction (26) commune, **en ce qu'**au moins deux agencements d'électrodes de guidage d'ions (3, 6) et (4, 5) se trouvent dans la chambre de réaction (26) commune et **en ce qu'**une source d'ions (2) se trouve dans la chambre de réaction (26) commune et une grille écran (7, 8) dans chacune des chambres de dérive (24, 25) des tubes de dérive, le premier agencement d'électrodes, constitué des électrodes (3) et (6) pouvant être commandé par l'unité de commande, de manière à servir à la séparation d'ions de produit positifs ou négatifs d'un agglomérat d'ions de produit à l'intérieur de la chambre de réaction (26), et le deuxième agencement d'électrodes constitué des électrodes (4) et (5) pouvant être commandé par l'unité de commande (21), de manière à servir à l'accélération des ions de produit positifs ou négatifs dans les chambres de dérive (24, 25) correspondantes.

3. Dispositif selon l'une des revendications précédentes, **caractérisé en ce que** les chambres de dérive (24, 25) comprennent des électrodes de dérive (22, 23) disposées en alternance, chaque électrode de dérive (22, 23) étant électriquement raccordée autour des chambres de dérive (24, 25) et formant une électrode à tension continue.

4. Dispositif selon l'une des revendications précédentes, **caractérisé en ce que** les chambres de dérive (24, 25) sont constituées d'un ou de plusieurs tubes à faible conductivité électrique.

5. Dispositif selon l'une des revendications précédentes, **caractérisé en ce que** les électrodes de guidage d'ions (3, 4, 5, 6) sont plates et forment la délimitation de la chambre de réaction (26).

6. Dispositif selon la revendication 4 ou la revendication 5, **caractérisé en ce que** les grilles écrans (7, 8) sont disposées devant les détecteurs (9, 10), lesdites grilles écrans (7, 8) servant à un découplage capacitif.

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3621240 A
- DE 19515270 C2
- US 4445038 A
- US 6459079 B1
- WO 2005001464 A1
- US 20070228269 A1
- GB 2228139 A


**In der Beschreibung aufgeführte Nicht-Patentliteratur**

- **G.A. EICEMAN ; Z. KARPAS.** Ion Mobility Spectrometry. CRC, 2005
- **ROKUSHIKA S. ; HATANO H. ; BAIM M.A. ; HILL H.H.** Resolution Measurement for Ion Mobility Spectrometry. *Anal. Chem.,* 1985, vol. 57, 1902